# EUROPEAN PATENT SPECIFICATION

(11) **EP 3 705 947 B1**
(45) Date of publication and mention of the grant of the patent: **19.10.2022**
(21) Application number: 20159220.1
(22) Date of filing: 25.02.2020
(51) Int. Cl.: G03G 15/043, B41J 2/47, B41J 2/45, B41J 2/44

(54) **IMAGE FORMING APPARATUS**
BILDERZEUGUNGSVORRICHTUNG
APPAREIL DE FORMATION D'IMAGES

(30) Priority: 06.03.2019 JP 2019040218
(43) Date of publication of application: 09.09.2020
(73) Proprietor: Toshiba Tec Kabushiki Kaisha, Shinagawa-ku Tokyo 141-8562 (JP)
(72) Inventor: TANIMOTO, Koji, Shinagawa-ku Tokyo 141-8562 (JP)
(74) Representative: Bandpay & Greuter

(56) References cited:
- US-A1- 2018 259 871

## Description

### FIELD

Embodiments described herein relate generally to an image forming apparatus.

### BACKGROUND

Image forming apparatuses, such as printers, copiers, and multi-functional peripherals (MFPs), using an electrophotographic process are known. Two different exposure systems called a laser optical system (also known as a LSU or laser scan unit) and a print head (also known as a solid head) are known as exposure means in the apparatuses. In a laser optical system, a photoconductive drum is exposed to a laser beam scanned by a polygon mirror. In a print head, the photoconductive drum is exposed to light from light emitting elements such as light emitting diodes (LEDs). US 2018/259871 A1 discloses an image forming apparatus according to the preamble of claim 1.

Since it is necessary to rotate the polygon mirror at high speed, the laser optical system consumes a lot of energy and also typically generates an operation sound audible during image formation processing. Furthermore, since a mechanism for scanning the laser beam and a lens group for focusing the scanning beam on the photoconductive drum are necessary, to the laser optical system tends to be a physically large unit.

Some print heads can be miniaturized because they have a structure in which light emitted from a plurality of light emitting elements is focused on a photoconductive drum using a small lens called a rod lens array. Since there are no moving parts, it can also achieve a quiet exposure process and less energy consumption. In addition to a print head using LEDs (or an arrangement of LED chips), a print head using organic light emitting diodes (OLEDs) has also been developed.

A print head using LEDs generally has LED chips arranged on a printed circuit board. OLEDs or organic electroluminescence (EL) elements are formed on a substrate using a photomask process, and these light emitting elements can be arranged with high precision. For example, the plurality of light emitting elements made relying on organic EL can be formed on a glass substrate.

A plurality of light emitting elements of the print head correspond to one line along a main scanning direction of the image forming apparatus, and each light emitting element emits light based on pixel information read from a page memory. That is, the light emission timing of each light emitting element of the print head is controlled based on the pixel information in image data.

The active light emitting element of the print head emits light according to the electric charge (potential) held in a capacitor, and an image is formed according to this light emission. When the light emission of the light emitting element is controlled based on original image data, stray or unintended light emission may be caused by the electric charge held in the capacitor. Unintended light emission may reduce image quality of printed images.

### DESCRIPTION OF THE DRAWINGS

FIG. 1 is a diagram illustrating an example of a positional relationship between a photoconductive drum and a print head in an image forming apparatus according to a first embodiment.
FIG. 2 is a diagram illustrating an example of a transparent substrate of the print head according to the first embodiment.
FIG. 3 is a diagram illustrating an example of light emitting element lines (two-line head) according to the first embodiment.
FIG. 4 is a diagram illustrating an example of a structure of the light emitting device according to the first embodiment.
FIG. 5 is a diagram illustrating an example of a circuit configuration including a DRV circuit for driving the light emitting element and a light emitting element that emits light by the DRV circuit according to the first embodiment.
FIG. 6 is a diagram illustrating an example of a head circuit block of the print head according to the first embodiment.
FIG. 7 is a diagram illustrating an example of the image forming apparatus including the print head according to the first embodiment.
FIG. 8 is a block diagram illustrating an example of a control system of the image forming apparatus according to the first embodiment.
FIG. 9 is a diagram illustrating an example of image data transfer (including transfer of additional null image data) in the image forming apparatus according to the first embodiment.
FIG. 10 is a diagram illustrating an example of image data transfer (not including transfer of additional null image data) in the image forming apparatus according to the first embodiment.
FIG. 11 is a diagram illustrating an example of an image formed based on the transfer of image data (including transfer of additional null image data) illustrated in FIG. 9.
FIG. 12 is a diagram illustrating an example of an image (tail image) formed based on the transfer of image data (not including the transfer of additional null image data) illustrated in FIG. 10.
FIG. 13 is a flowchart illustrating a first example of turn-off control (non-emission control) by the image forming apparatus according to the first embodiment.
FIG. 14 is a flowchart illustrating a second example of turn-off control (non-emission control) by the image forming apparatus according to the first embodiment.
FIG. 15A is a diagram illustrating an example of a relationship between a sample/hold signal and a light emitting state of the light emitting element when the turn-off control according to the first embodiment is performed.
FIG. 15B is a diagram illustrating an example of the relationship between the sample/hold signal and the light emitting state of the light emitting element when the turn-off control according to the first embodiment is performed.
FIG. 16A is a diagram illustrating an example of a relationship between the sample/hold signal and the light emitting state of the light emitting element when the turn-off control is not performed.
FIG. 16B is a diagram illustrating an example of a relationship between the sample/hold signal and the light emitting state of the light emitting element when the turn-off control is not performed.
FIG. 17 is a diagram illustrating an example of a circuit configuration including a DRV circuit for driving a light emitting element, a light emitting element that emits light by the DRV circuit, and a switch that switches a current supply to the light emitting element according to a second embodiment.
FIG. 18 is a diagram illustrating an example of a head circuit block of a print head according to the second embodiment.
FIG. 19 is a diagram illustrating an example of a relationship of a sample/hold signal, a capacitor potential, original image data D1, and additional null image data D2, a switch SW, and a light emitting state of the light emitting element when turn-off control according to the second embodiment is performed.
FIG. 20 is an example of a relationship between the sample/hold signal, the capacitor potential, the original image data D1, the switch SW, and the light emitting state of the light emitting element when the turn-off control according to the second embodiment is not performed.

### DETAILED DESCRIPTION

The invention is defined by the appended claims.

One or more embodiments of the present disclosure are directed to providing an image forming apparatus that reduces unintended light emission of a light emitting element and provides improved reproducibility of an original image.

In general, according to an embodiment, an image forming apparatus includes a print head and a control circuit (control unit). The print head includes a plurality of light emitting elements arranged in a main scanning direction and a plurality of drive circuits corresponding to the plurality of light emitting elements, respectively. The control circuit is configured to add footer null image data after original image data corresponding to an image portion to be formed by one of the light emitting elements. The control circuit is configured to supply the original image data followed by the footer null image data to the print head, and cause the one of the light emitting elements to emit light in accordance with the original image data and then to be turned off in accordance with the footer null image data. The apparatus of the invention is defined in claim 1.

Preferably, the control circuit is further configured to determine whether a last line of the image portion is a blank image, and when the last line of the image portion is a non-blank image, add the footer null image data after the original image data.

Preferably, the control circuit is further configured to, when the last line of the image portion is a blank image, supply the original image data to the print head without adding the footer null image data.

Preferably, a length of the footer null image data is equal to a length of one line of the original image data.

Preferably, the control circuit is further configured to: add header null image data before the original image data; and sequentially supply the header null image data, the original image data, and the footer null image data, in this order, to the print head and cause the one of the light emitting elements to be turned off in accordance with the header null image data.

Preferably, a length of the header null image data is equal to a length of one line of the original image data.

Preferably, the control circuit is further configured to supply an enabling signal to the print head, such that the one of the drive circuits becomes enabled when the one of the light emitting elements is driven in accordance with the header null image data, and is not enabled when the one of the light emitting elements is driven in accordance with the footer null image data.

Preferably, the one of the drive circuits includes a transistor connected in series with the one of the light emitting elements.

Preferably, the one of the drive circuits includes a capacitor connected between a channel electrode and a gate electrode.

Preferably, the control circuit is further configured to cause a voltage corresponding to the footer null image data to be set in the capacitor during a sampling period for one line, and then the voltage to be maintained during a holding period for the one line, the voltage causing the one of the light emitting elements to be turned off.

Preferably, the print head further includes a switch connected in series with the one of the light emitting elements and is configured to turn off the switch in accordance with the footer null image data.

The present invention further relates to a method for controlling an image forming apparatus including a print head including light emitting elements along a main scanning direction and a plurality of drive circuits corresponding to the light emitting elements, the method comprising: adding footer null image data after original image data corresponding to an image portion to be formed by one of the light emitting elements; and supplying the original image data followed by the footer null image data to the print head, and causing the one of the light emitting elements to emit light in accordance with the original image data and then to be turned off in accordance with the footer null image data. The method of the invention is defined in claim 11.

The method may further comprise: determining whether a last line of the image portion is a blank image, wherein when it is determined that the last line of the image portion is a non-blank image, the footer null image data is added after the original image data.

Preferably, when it is determined that the last line of the image portion is a blank image, the original image data is supplied to the print head without the footer null image data being added.

Preferably, a length of the footer image null data is equal to a length of one line of the original image data.

The method may further comprise adding header null image data before the original image data.

The method may further comprise sequentially supplying the header null image data, the original image data, and the footer null image data, in this order, to the print head and causing the one of the light emitting elements to be turned off in accordance with the header null image data.

Preferably, a length of the header null image data is equal to a length of one line of the original image data.

The method may further comprise supplying an enabling signal to the print head, such that the one of the drive circuits becomes enabled when the one of the light emitting elements is driven in accordance with the header null image data, and is not enabled when the one of the light emitting elements is driven in accordance with the footer null image data.

The method may further comprise: setting a voltage corresponding to the footer null image data in the capacitor during a sampling period for one line, and then maintaining the voltage during a holding period for the one line, the voltage causing the one of the light emitting elements to be turned off.

Preferably, the print head further includes a switch connected in series with the one of the light emitting elements, the method further comprising turning off the switch in accordance with the footer null image data.

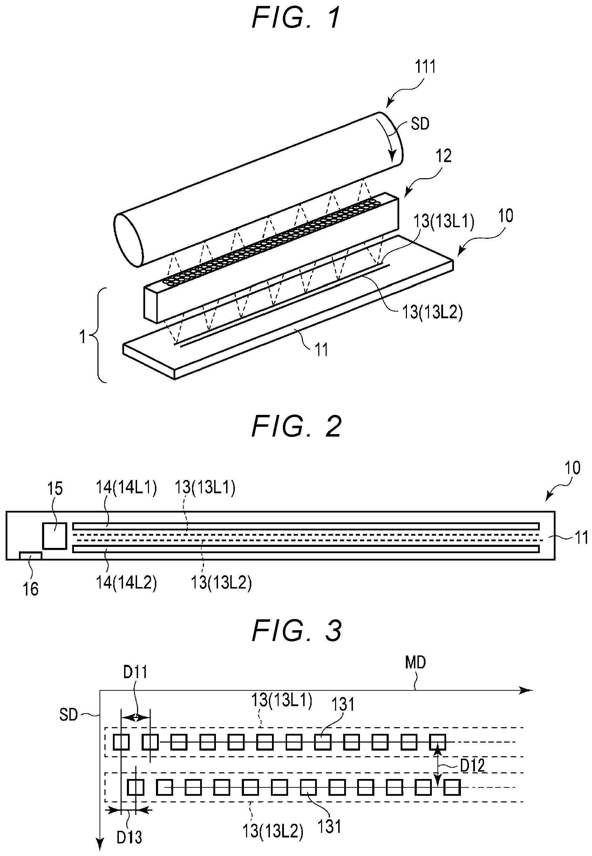

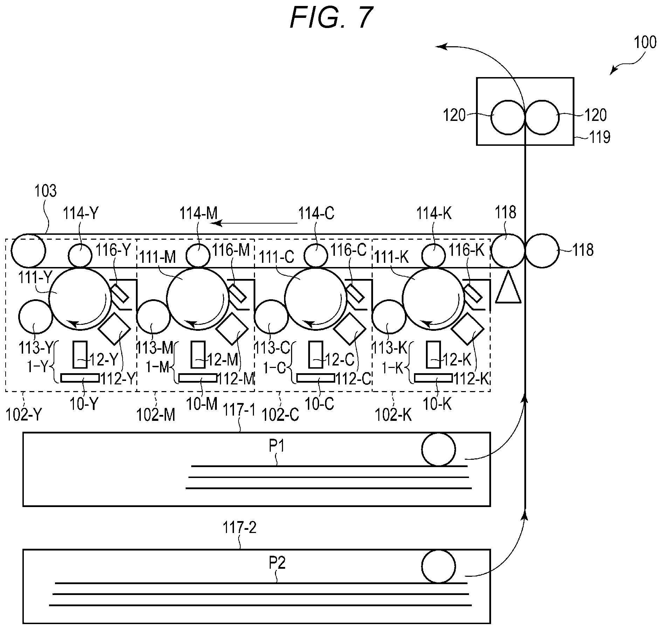

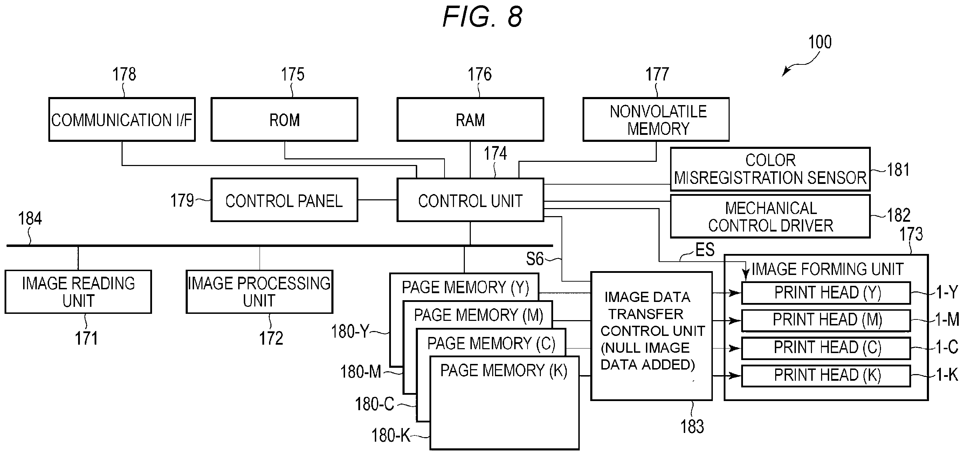

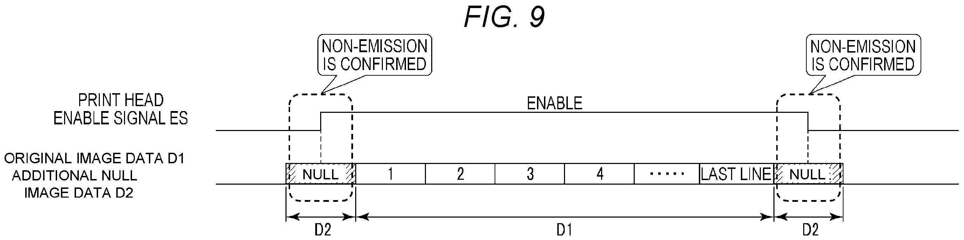

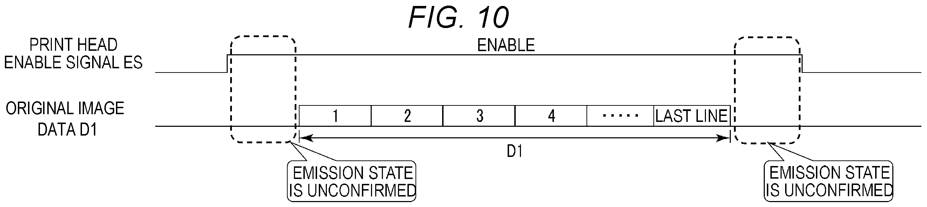

First and second example embodiments will be described below with reference to drawings. An example of the configuration of a print head according to a first embodiment will be described with reference to FIGS. 1 to 6. An example of the configuration of an image forming apparatus (including a print head) according to the first embodiment will be described with reference to FIGS. 7 and 8. With reference to FIGS. 9, 11, 13, 14, 15A, and 15B, an example of light emission control and turn-off control of a print head by a control unit of the image forming apparatus according to the first embodiment will be described. With reference to FIGS. 10, 12, 16A, and 16B, an example of the light emission control of a print head by a control unit of the image forming apparatus according to the first embodiment will be described.

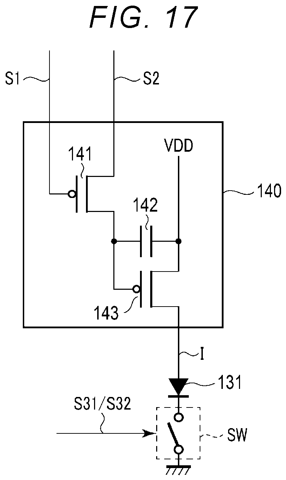

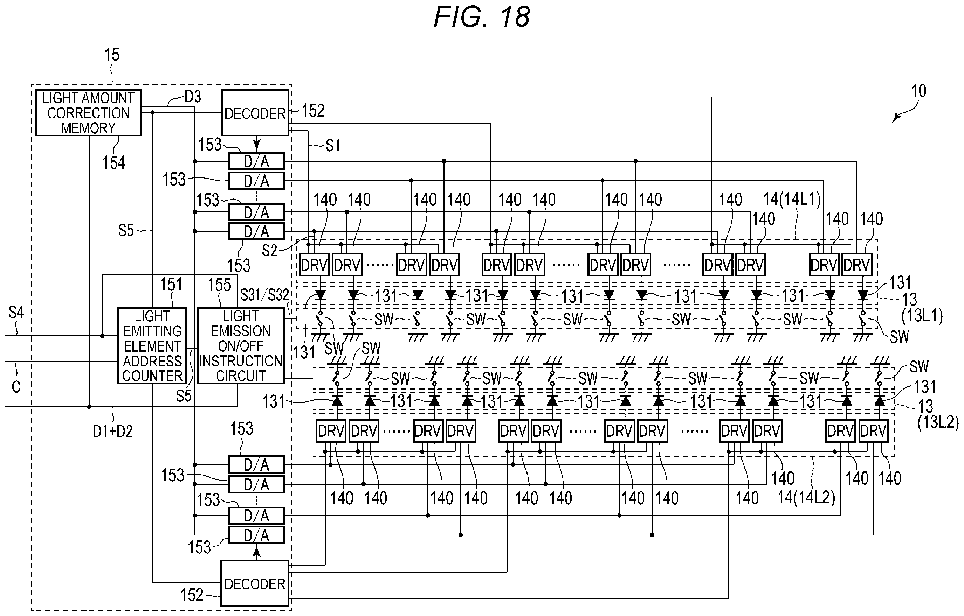

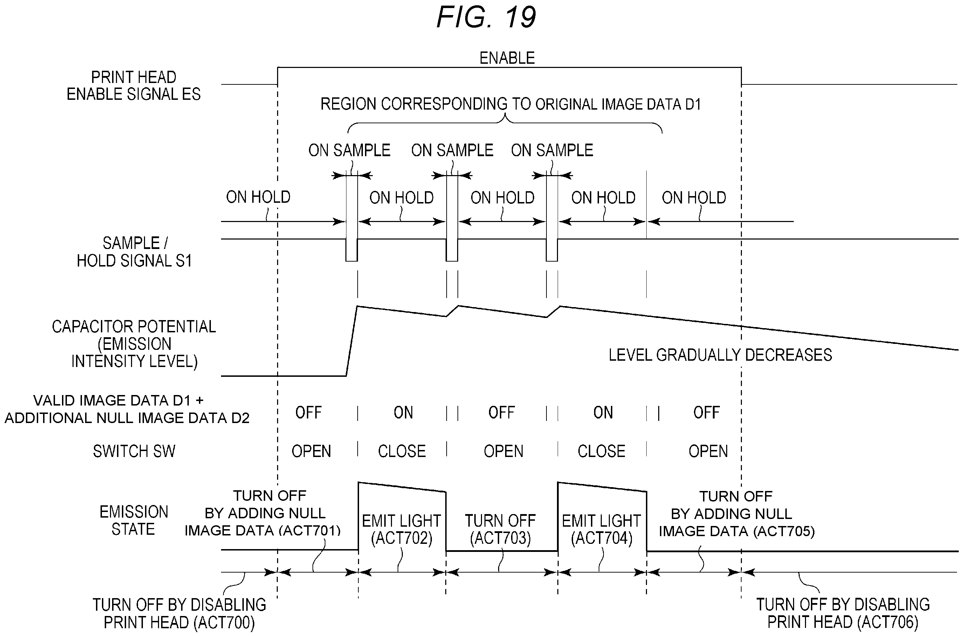

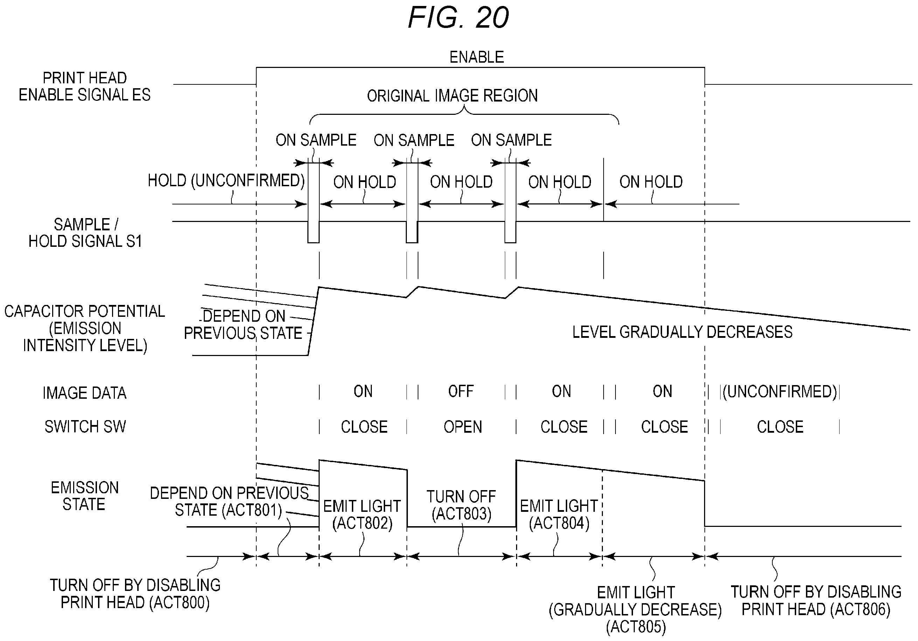

An example of the configuration of a print head according to a second embodiment will be described with reference to FIGS. 17 and 18. With reference to FIG. 19, an example of light emission control and turn-off control of a print head by a control unit of an image forming apparatus according to the second embodiment will be described. With reference to FIG. 20, an example of light emission control of a print head by a control unit of the image forming apparatus according to the second embodiment will be described.

The light emission control described in each of the first and second embodiments indicates light emission control of a light emitting element based on original image data (control of light emission and turn-off at a predetermined timing). The turn-off control described in each of the first and second embodiments indicates turn-off control of the light emitting element (control of turn-off at a predetermined timing) based on added null image data. Here, the null image data may refer to image data corresponding to an image portion in which each pixel has a maximum or minimum value of a gradation level so that no toner is formed for the pixel. Therefore, a blank image with no toner or substantially a negligible amount of toner is formed on a region of a sheet corresponding to such an image portion. In contrast, a non-blank image may refer to an image with toner of a conceivable amount that can be recognized by human eyes.

### [First Embodiment: Configuration of Print Head]

FIG. 1 is a diagram illustrating an example of a positional relationship between a photoconductive drum and a print head in an image forming apparatus according to a first embodiment. For example, an image forming apparatus such as a printer, a copier, or a multifunction machine includes a photoconductive drum 111 illustrated in FIG. 1, and a print head 1 is disposed so as to face the photoconductive drum 111.

The photoconductive drum 111 rotates in the direction of the arrow illustrated in FIG. 1. This rotation direction is referred to as a sub-scanning direction SD. The photoconductive drum 111 is uniformly electrostatically charged by a charger and is then exposed to light from the print head 1, whereby the electrical potential of the exposed portion is lowered. That is, an electrostatic latent image can be formed on the photoconductive drum 111 by controlling the light emission of the print head 1. Controlling the light emission of the print head 1 refers here to controlling the timing of light emission and turn-off (non-light emission) of the print head 1.

The print head 1 includes a light emitting unit 10 and a rod lens array 12. The light emitting unit 10 further includes a transparent substrate 11. For example, the transparent substrate 11 is a glass substrate that transmits light. On the transparent substrate 11, a plurality of light emitting element lines 13 made of a plurality of LED or OLED light emitting elements are formed. FIG. 1 illustrates an example in which two lines, a first light emitting element line 13L1 and a second light emitting element line 13L2, are formed in parallel to each other. In the first embodiment, a case where the print head 1 includes a plurality of light emitting element lines 13 will be described, but a case where the print head 1 includes only a single light emitting element line 13 is also contemplated.

FIG. 2 is a diagram illustrating an example of the transparent substrate constituting the print head according to the first embodiment. As illustrated in FIG. 2, two light emitting element lines 13 (the first light emitting element line 13L1 and the second light emitting element line 13L2) are formed in the central portion on the transparent substrate 11 along the longitudinal direction of the transparent substrate 11. In the vicinity of the light emitting element line 13, drive circuit lines 14 (a first drive circuit line 14L1 and a second drive circuit line 14L2) for driving (causing light to be emitted from) each light emitting element is formed. Hereinafter, a "drive circuit" is referred to as a "DRV".

In FIG. 2, a DRV circuit line 14 for driving the light emitting elements is arranged on both sides of the two light emitting element lines 13, but the DRV circuit lines 14 may instead be arranged on one side.

An integrated circuit (IC) 15 is disposed at one end of the transparent substrate 11. The transparent substrate 11 includes a connector 16. The connector 16 is electrically connected to the print head 1 and a control system of a printer, a copier, or a multi-function machine. This connection enables power supply, head control, image data transfer, and the like. The transparent substrate 11 is attached with a substrate for sealing the light emitting element line 13, the DRV circuit line 14 and the like so as not to be exposed to the outside air. If it is difficult to attach a connector to the transparent substrate, flexible printed circuits (FPC) may be connected to the transparent substrate and electrically connected to the control system.

FIG. 3 is a diagram illustrating an example of the light emitting element lines (two-line head) according to the first embodiment. As illustrated in FIG. 3, each light emitting element line 13 includes a plurality of light emitting elements 131 arranged along a main scanning direction MD perpendicular to the rotating direction (sub-scanning direction SD) of the photoconductive drum 111. That is, the plurality of light emitting elements 131 forming the first light emitting element line 13L1 and the plurality of light emitting elements 131 forming the second light emitting element line 13L2 are parallel to the main scanning direction MD.

Each light emitting element 131 is, for example, a 20 µm square. An arrangement interval D11 between adjacent light emitting elements 131, for example, a pitch of about 42.3 µm for a resolution of 600 dpi.

The first light emitting element array 13L1 and the second light emitting element array 13L2 are arranged at an interval of distance D12 along the sub-scanning direction SD. Furthermore, each light emitting element 131 in the first light emitting element line 13L1 and each light emitting element 131 in the second light emitting element line 13L2 are arranged at a predetermined offset pitch D13 and thus shifted relatively along the main scanning direction MD. For example, the predetermined offset pitch D13 is 1/2 of the arrangement interval D11. Thereby, the two light emitting element lines 13 are arranged in a staggered manner.

When the light emitting elements in the first and second light emitting element lines 13 emit light at the same timing, a staggered exposure pattern is formed on the photoconductive drum 111. Assuming that the upstream side is the first line and the downstream side is the second line with respect to the moving direction of the photoconductive drum 111, the control unit (e.g., a control unit 174 in FIG. 8) causes the first light emitting element line 13L1 and the second light emitting element line 13L2 to emit light at different timings depending on the moving speed of the photoconductive drum 111 and the distance D12. That is, the control unit 174 delays the light emission timing of the second light emitting element line 13L2 with respect to the first light emitting element line 13L1 by a certain time according to the rotating speed of the photoconductive drum 111 and the separating distance D12. In other words, the control unit 174 outputs first light emitting element image data to the first light emitting element line 13L1 and second light emitting element image data to the second light emitting element line 13L2 at different timings depending on the rotating (moving) speed of the photoconductive drum 111 and the distance D12. Here, the first light emitting element image data and the second light emitting element image data correspond to image data for each line along the main scanning direction. As a result, a latent image can be formed on the photoconductive drum with a resolution of 1200 dpi.

As described above, the control unit 174 controls the light emission timings (image data transfer timings) of the plurality of light emitting element lines 13, whereby the image density can be increased. In the case of two light emitting element lines 13, the density of the image can be increased to twice the density of the light emitting elements 131 per line, and in the case of n light emitting element lines 13 (n ≥ 3, n being an integer), the density of the image can be increased by n times the density of the light emitting elements 131 per line.

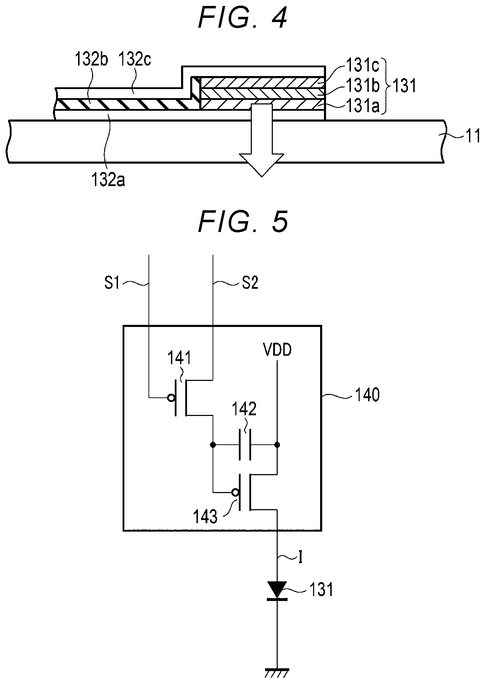

FIG. 4 is a diagram illustrating an example of a structure of the light emitting device according to the first embodiment. In FIG. 4, the substrate used for sealing is omitted. For example, the light emitting element 131 is an organic electroluminescence (EL). As illustrated in FIG. 4, the light emitting element 131 includes a hole transport layer 131a, a light emitting layer 131b, and an electron transport layer 131c and is sandwiched between and in contact with an electrode (+) 132a and an electrode (-) 132c insulated by an insulating layer 132b. In the first embodiment, for example, the light emitting layer 131b is an organic EL. The electrode (-) 132c has a structure that reflects the light emitted from the light emitting layer 131b. With this structure, light emitted from the light emitting layer 131b is output to the transparent substrate 11 side.

FIG. 5 is a diagram illustrating an example of a circuit configuration including a DRV circuit for driving the light emitting element and a light emitting element that emits light by the DRV circuit according to the first embodiment. The DRV circuit includes transistors 141 and 143, each of which may be a low-temperature polysilicon thin film transistor, and a capacitor 142. The capacitor 142 is connected between a channel electrode and a gate electrode of the transistor 143. A sample/hold signal S1 becomes "L" level when the light emission intensity of the light emitting element 131 connected to a DRV circuit 140 is changed. When the sample/hold signal S1 becomes "L" level, the voltage of the capacitor 142 changes according to the voltage of a light emission level signal S2. That is, the capacitor 142 holds a charge that changes according to image data including a plurality of image lines.

When the sample/hold signal S1 becomes "H", the voltage of the capacitor 142 is held. Even if the voltage of the light emission level signal S2 changes, the voltage level of the capacitor 142 does not change. A current corresponding to the voltage held in the capacitor 142 flows through the light emitting element 131 connected to a signal line I of the DRV circuit 140. That is, the light emitting element 131 emits light according to the potential of the capacitor. A predetermined light emitting element 131 is selected from the plurality of light emitting elements 131 included in the light emitting element line 13 by the sample/hold signal S1, and light emission intensity is determined by the light emission level signal S2, and the light emission intensity can be maintained.

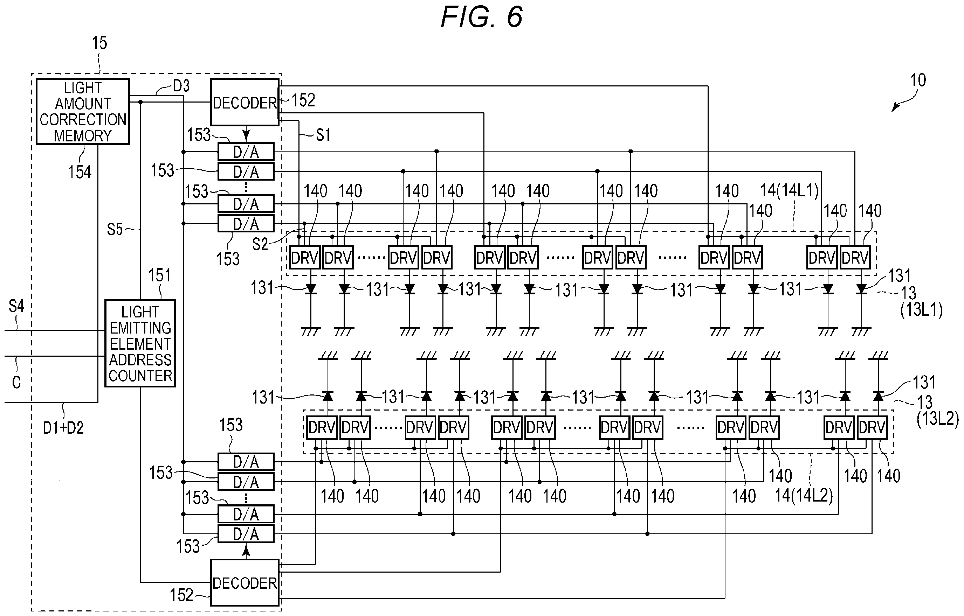

FIG. 6 is a diagram illustrating an example of a head circuit block of the print head according to the first embodiment. As illustrated in FIG. 6, the light emitting unit 10 includes a head circuit block including the IC 15, and the IC 15 includes a light emitting element address counter 151, a decoder 152, a D/A (digital to analog) conversion circuit 153, a light amount correction memory 154, and the like. The light emitting element address counter 151, the decoder 152, the D/A conversion circuit 153, and the light amount correction memory 154 supply signals (e.g., sample/hold signal S1 and emission level signal S2) for controlling the light emission intensity and ON and OFF of each light emitting element 131 to the DRV circuit 140 and the like.

As illustrated in FIG. 6, the light emitting element 131 is connected to each DRV circuit 140. Each individual DRV circuit 140 supplies an individual current to each individual light emitting element 131. The D/A conversion circuit 153 is connected to the first DRV circuit line 14L1 connected to the first light emitting element line 13L1. Similarly, the D/A conversion circuit 153 is connected to the DRV circuit line 14L2 connected to the second light emitting element line 13L2.

The light amount correction memory 154 stores correction data D3 corresponding to the current passed through each light emitting element 131. A horizontal synchronization signal S4 and an image data write clock C are input to the light emitting element address counter 151 via the connector 16. The horizontal synchronization signal S4 resets the count value of the light emitting element address counter 151. The light emitting element address counter 151 outputs a light emitting element address signal S5 synchronized with the image data write clock C.

The light amount correction memory 154 receives the original image data D1 and the light emitting element address signal S5 output from the light emitting element address counter 151. The light emitting element address signal S5 output from the light emitting element address counter 151 is input to the decoder 152. The decoder 152 outputs the sample/hold signal S1 corresponding to the light emitting element 131 specified by the light emitting element address signal S5. The light amount correction memory 154 outputs correction data D3 corresponding to the light emitting element 131 specified by the light emitting element address signal S5 based on the original image data D1. The correction data D3 output from the light amount correction memory 154 is input to the D/A conversion circuit 153. The D/A conversion circuit 153 outputs the voltage of the light emission level signal S2 based on the correction data D3. The voltage of the light emission level signal S2 is sampled and held in the capacitor 142 of the DRV circuit 140. Sample hold on the capacitor 142 is performed periodically.

### [First Embodiment: Configuration of Image Forming Apparatus]

FIG. 7 is a diagram illustrating an example of the image forming apparatus including the print head according to the first embodiment. FIG. 7 illustrates an example of a quadruple tandem type color image forming apparatus, but the print head 1 of the first embodiment can also be applied to a monochrome image forming apparatus.

As illustrated in FIG. 7, for example, the image forming apparatus 100 includes an image forming unit 102-Y that forms a yellow (Y) image, an image forming unit 102-M that forms a magenta (M) image, an image forming unit 102-C that forms a cyan (C) image, and an image forming unit 102-K that forms a black (K) image. The image forming units 102-Y, 102-M, 102-C, and 102-K form yellow, cyan, magenta, and black images, respectively and transfer the images to a transfer belt 103. As a result, a full color image is formed on the transfer belt 103.

The image forming unit 102-Y includes a charging charger 112-Y, a print head 1-Y, a developing device 113-Y, a transfer roller 114-Y, and a cleaner 116-Y around a photoconductive drum 111-Y. The image forming units 102-M, 102-C, and 102-K have the same configuration.

In FIG. 7, the configuration of the image forming unit 102-Y that forms a yellow (Y) image is given a suffix symbol "-Y". The configuration of the image forming unit 102-M that forms a magenta (M) image is given a suffix symbol "-M". The configuration of the image forming unit 102-C that forms a cyan (C) image is given a suffix symbol "-C". The configuration of the image forming unit 102-K that forms a black (K) image is given a suffix symbol "-K".

The charging chargers 112-Y, 112-M, 112-C, and 112-K uniformly charge the photoconductive drums 111-Y, 111-M, 111-C, and 111-K, respectively. The print heads 1-Y, 1-M, 1-C, and 1-K each expose the respective photoconductive drums 111-Y, 111-M, 111-C, 111-K using light emission from light emitting elements 131 of the first light emitting element line 13L1 and the second light emitting element line 13L2 in each respective print head and form electrostatic latent images on the photoconductive drums 111-Y, 111-M, 111-C, and 111-K. The developing device 113-Y supplies yellow toner, the developing device 113-M supplies magenta toner, the developing device 113-C supplies cyan toner, the developing device 113-K supplies black toner to the electrostatic latent image portions of the respective photoconductive drums 111-Y, 111-M, 111-C, and 111-K.

The transfer rollers 114-Y, 114-M, 114-C, and 114-K transfer the toner images formed (developed) on the photoconductive drums 111-Y, 111-M, 111-C, and 111-K to the transfer belt 103. Cleaners 116-Y, 116-M, 116-C, and 116-K remove (clean) the toner remaining on the photoconductive drums 111-Y, 111-M, 111-C, and 111-K and enter a standby state for the next image formation process.

A first size (e.g., a small size) paper P1 is stored in a paper cassette 117-1 which is paper supply means. A second size (e.g., a large size) paper P2 is stored in a paper cassette 117-2 which is a paper supply means. In this context, paper is an example of an image forming medium.

The toner image is transferred from the transfer belt 103 to the paper P1 or P2 from the paper cassette 117-1 or 117-2 taken out by a transfer roller pair 118 as transfer means. The paper P1 or P2 to which the toner image has been transferred is then heated and pressed by a fixing roller 120 of a fixing unit 119. The toner image is firmly fixed on the paper P1 or P2 by heating and pressing by the fixing roller 120. By repeating the above process operation, the image forming operation is continuously performed.

FIG. 8 is a block diagram illustrating an example of a control system of the image forming apparatus according to the first embodiment. As illustrated in FIG. 8, an image forming apparatus 100 includes an image reading unit 171, an image processing unit 172, an image forming unit 173, a control unit 174, a read only memory (ROM) 175, a random access memory (RAM) 176, a nonvolatile memory 177, a communication I/F 178, a control panel 179, page memories 180-Y, 180-M, 180-C, and 180-K, a color misregistration sensor 181, a mechanical control driver 182, an image data transfer control unit 183, and an image data bus 184. The image data transfer control unit 183 can provide the null image data addition. The image forming unit 173 includes image forming units 102-Y, 102-M, 102-C, and 102-K.

The ROM 175, the RAM 176, the nonvolatile memory 177, the communication I/F 178, the control panel 179, the color misregistration sensor 181, the mechanical control driver 182, and the image data transfer control unit 183 are connected to the control unit 174.

The image reading unit 171, the image processing unit 172, the control unit 174, and the page memories 180-Y, 180-M, 180-C, and 180-K are connected to the image data bus 184. Each of the page memories 180-Y, 180-M, 180-C, and 180-K outputs Y, M, C, or K original image data D1. The image data transfer control unit 183 is connected to the page memories 180-Y, 180-M, 180-C, and 180-K, and the Y original image data D1 from the page memory 180-Y, the M original image data D1 from the page memory 180-M, the C original image data D1 from the page memory 180-C, and the K original image data D1 from the page memory 180-K are input. The print heads 1-Y, 1-M, 1-C, and 1-K are connected to the image data transfer control unit 183 corresponding to each original image data D1. The image data transfer control unit 183 inputs each original image data D1 to the print heads 1-Y, 1-M, 1-C, or 1-K corresponding to each original image data D1.

The control unit 174 is configured with one or more processors and controls operations such as image reading, image processing, and image formation in accordance with various programs stored in at least one of the ROM 175 and the nonvolatile memory 177. The control unit 174 performs light emission control in accordance with various programs stored in at least one of the ROM 175 and the nonvolatile memory 177. The light emission control is timing control of light emission and turn-off (non-light emission).

The control unit 174 outputs a print head enable signal ES to each print head 1 of the image forming unit 173, and also outputs the transfer control signals of the original image data D1 and additional null image data D2 to the image data transfer control unit 183, and controls the light emission of the print head 1 based on the original image data D1 and the additional null image data D2. Alternatively, the control unit 174 may output the print head enable signal ES to each print head 1 of the image forming unit 173, and also output the transfer control signals of the original image data D1 to the image data transfer control unit 183, and control the light emission of the print head 1 based on the original image data D1.

The control unit 174 inputs the image data of test patterns on the page memories 180-Y, 180-M, 180-C, and 180-K and forms the test pattern. The color misregistration sensor 181 detects the test patterns formed on the transfer belt 103 and outputs detected signals to the control unit 174. The control unit 174 can recognize the positional relationship between the test patterns of the respective colors from the input of the color misregistration sensor 181. Further, the control unit 174 selects the paper cassette 117-1 or 117-2 for feeding a paper on which an image is to be formed, through the mechanical control driver 182.

The image data transfer control unit 183 is configured with a line memory and transfers the additional null image data D2 to the light emitting elements of the print heads 1-Y, 1-M, 1-C, and 1-K in accordance with instructions from the control unit 174 based on the original image data D1 sent from the page memories 180-Y, 180-M, 180-C, and 180-K and a null image data addition control signal S6 from the control unit 174. For example, the image data transfer control unit 183 adds the additional null image data D2 to the original image data D1 based on the null image data addition control signal S6 and outputs the original image data D1 and the additional null image data D2 to the print heads 1-Y, 1-M, 1-C, or 1-K. The additional null image data D2 is data for turning off the light emitting element 131. Alternatively, the image data transfer control unit 183 may transfer the original image data D1 to the light emitting elements of the print heads 1-Y, 1-M, 1-C, and 1-K (not transferring the additional null image data D2).

The ROM 175 stores various programs necessary for the control of the control unit 174. The various programs include a print head emission control program. The light emission control program is a program for controlling the timing of light emission and turn-off (non-light emission).

The RAM 176 temporarily stores data necessary for control by the control unit 174. The nonvolatile memory 177 stores updated programs, various parameters, and the like. The nonvolatile memory 177 may store some or all of various programs.

The mechanical control driver 182 controls the operation of a motor or the like necessary for printing in accordance with instructions from the control unit 174. The communication I/F 178 outputs various information to the outside and inputs various information from the outside. For example, the communication I/F 178 functions as an acquisition unit that acquires image data including a plurality of image lines, and the image forming apparatus 100 prints image data acquired via the communication I/F 178 by a print function. The control panel 179 receives operation inputs from a user or a service person (maintenance technician).

The image reading unit 171 optically reads an image of a document, functions as an acquisition unit that acquires image data including a plurality of image lines, and outputs the image data to the image processing unit 172. The image processing unit 172 performs various types of image processing (including correction) on the image data input via the communication I/F 178 or the image data from the image reading unit 171. The page memories 180-Y, 180-M, 180-C, and 180-K store image data processed by the image processing unit 172. The control unit 174 edits the image data on the page memories 180-Y, 180-M, 180-C, and 180-K so as to match the printing position and the print head. The image forming unit 173 forms an image based on the image data D1 (in other words, original image data D1 transferred by the image data transfer control unit 183) stored in the page memories 180-Y, 180-M, 180-C, and 180-K. That is, the image forming unit 173 forms an image corresponding to the light emission (light emission and turn-off state) of the light emitting element 131 based on the original image data D1 or the original image data D1 and the additional null image data D2. The image forming unit 173 includes the print heads 1-Y, 1-M, 1-C, and 1-K.

### [First Embodiment: Light Emission Control of Print Head]

FIG. 9 is a diagram illustrating an example of image data transfer (including transfer of additional null image data D2) in the image forming apparatus according to the first embodiment. The control unit 174 outputs the print head enable signal ES for switching the operation of the print head 1 between enabled and disabled based on the timing of image formation to the print head 1 or outputs the null image data addition control signal S6 and an image data transfer control signal to the image data transfer control unit 183. The null image data addition control signal S6 is a control signal for adding null image data before and after the original image data. As a result, as illustrated in FIG. 9, during the valid period of the print head enable signal ES, the image data transfer control unit 183 outputs the additional null image data D2 at the beginning (hereinafter may be referred to as "header null image data"), the original image data D1 including the last line from the one line following the additional null image data D2 at the beginning, and the additional null image data D2 after the last line (hereinafter may be referred to as "footer null image data"). The original image data may include image data portion corresponding to a blank image.

The null image data addition control signal S6 may be a control signal for adding null image data after the original image data. In this case, during the valid period of the print head enable signal ES, the image data transfer control unit 183 outputs the original image data D1 including one line to the last line and the additional null image data D2 after the last line.
In an embodiment, a time period to transmit the header null image data D2 and/or the footer null image data D2 may be equal to a time period to transmit one line of the original image data D1. Further, in an embodiment, a data transmission rate to transmit the header null image data D2 and/or the footer null image data D2 may be equal to a data transmission rate to transmit the one line of the original image data D1. In an embodiment, therefore, a length (data size) of the header null image data and/or the footer null image data may be equal to a length (data size) of one line of the original image data.

The control unit 174 may output the null image data addition control signal S6 to the image data transfer control unit 183 when the last line of the original image data is other than null (e.g., corresponds to a blank image data), and the control unit 174 may not output the null image data addition control signal S6 to the image data transfer control unit 183 if the last line is null.

The light emitting element 131 is turned off according to the additional null image data D2 at the beginning, is turned on or off according to the original image data including the last line from the one line following the additional null image data D2 at the beginning, and is turned off according to the additional null image data D2 after the last line.

FIG. 10 is a diagram illustrating an example of image data transfer not including transfer of additional null image data D2 in the image forming apparatus according to the first embodiment. The control unit 174 outputs the print head enable signal ES for switching the operation of the print head 1 between enabled and disabled based on the timing of image formation to the print head 1 or outputs the image data transfer control signal to the image data transfer control unit 183. As a result, as illustrated in FIG. 10, during the valid period of the print head enable signal ES, the image data transfer control unit 183 outputs the original image data D1 including one line to the last line. Since the null image data is not added before and after the original image data output from the image data transfer control unit 183, the light emitting state of the light emitting element 131 is not confirmed before and after the original image data. When the light emitting element 131 emits light according to the original image data of the last line, the light emitting element 131 is gradually turned off due to the influence of the electric charge held in the capacitor 142 thereafter.

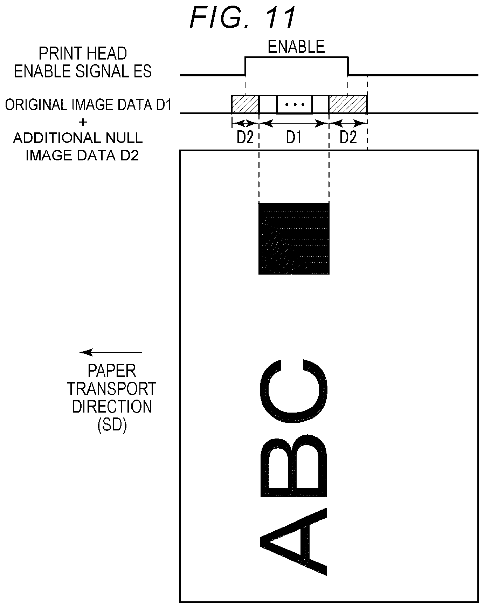

FIG. 11 is a diagram illustrating an example of an image formed based on the transfer of image data (including transfer of additional null image data D2) illustrated in FIG. 9. As illustrated in FIG. 11, when the print head enable signal ES changes in the order of disable, enable, disable corresponding to the paper transport direction (sub-scanning direction SD), and null image data is added after the original image data (after the last line), after the original image data, the light emitting element 131 is confirmed to be turned off, and the original image corresponding to the acquired image data can be reproduced accurately. When null image data is added before and after the original image data (before one line and after the last line), the light emitting element 131 is confirmed to be turned off before and after the original image data, and the original image corresponding to the acquired image data can be reproduced more accurately.

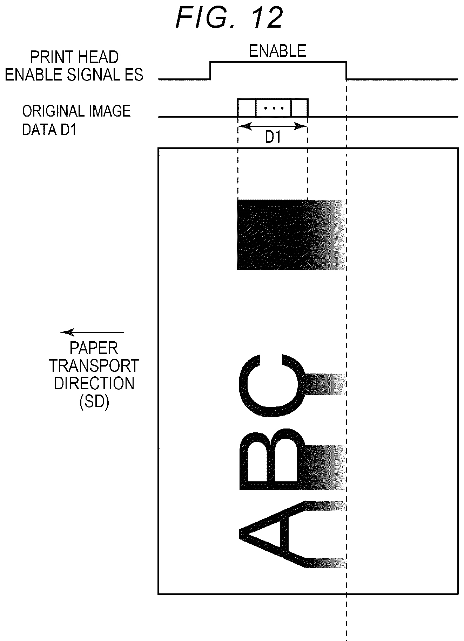

FIG. 12 is a diagram illustrating an example of an image (referred to as a tail image) formed based on the transfer of image data without additional null image data D2 as illustrated in FIG. 10. As illustrated in FIG. 12, since the print head enable signal ES changes in the order of disable, enable, disable corresponding to the paper transport direction (sub-scanning direction SD), and null image data is not added before and after the original image data (before one line and after the last line), before and after the original image data, the light emission state of the light emitting element 131 becomes unconfirmed, and the original image corresponding to the acquired image data may not be accurately reproduced. For example, a tail image may be formed in a case where the light emission of the light emitting element 131 is gradually turned off after the last line of original image data.

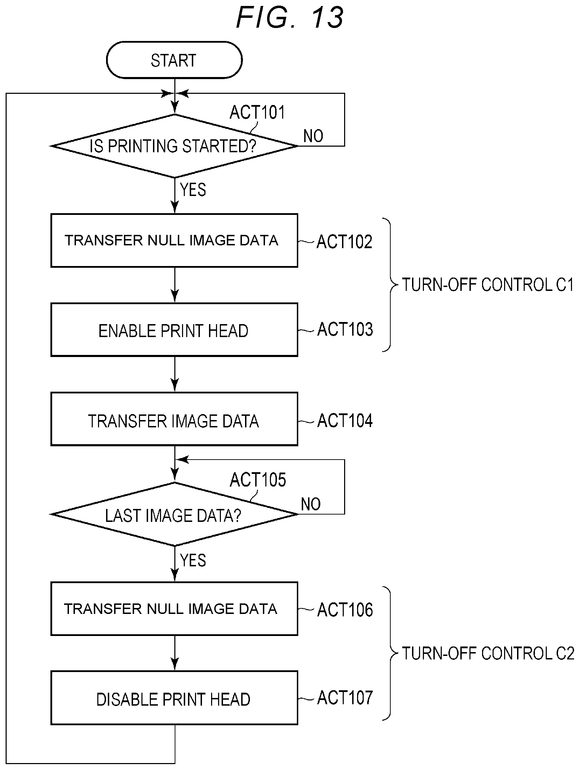

FIG. 13 is a flowchart illustrating a first example of turn-off control (non-emission control) by the image forming apparatus according to the first embodiment. The control unit 174 configured by one or more processors or the like outputs the original image data D1 including a plurality of image lines to the IC 15 (connected to a plurality of DRV circuits 140) and controls the light emission of the plurality of light emitting elements 131 according to the original image data D1 including the plurality of image lines. This light emission control is to control the light emission or turn-off of the plurality of light emitting elements 131 according to the original image data D1. In addition, the control unit 174 performs a turn-off control C1 for turning off the plurality of light emitting elements 131 before controlling the light emission of the plurality of light emitting elements 131 according to the original image data D1 including the plurality of image lines. Further, the control unit 174 controls the light emission of the plurality of light emitting elements 131 according to the last line included in the original image data D1, and then executes a turn-off control C2 for turning off the plurality of light emitting elements 131. In general, the turn-off control C1 is not essential in this context.

For example, when the control panel 179 receives a print start instruction from the user, the control unit 174 detects this print start (ACT 101, YES) and executes the turn-off controls C1 (ACT 102, ACT 103) and C2 (ACT 106, ACT 107).

For example, the control unit 174 outputs the null image data addition control signal S6 to control the transfer of the null image data (ACT 102), enables the light emission control by the print head enable signal ES (ACT 103), and outputs an image data transfer control signal to control the transfer of the original image data D1 (ACT 104). That is, the control unit 174 executes the turn-off control C1 for turning off the plurality of light emitting elements 131 before outputting the original image data D1 to the plurality of DRV circuits 140 to control the light emission of the plurality of light emitting elements 131. Thereafter, the control unit 174 outputs the original image data D1 to the plurality of DRV circuits 140 and controls the light emission of the plurality of light emitting elements 131 according to the original image data D1.

After controlling the light emission of the plurality of light emitting elements 131 according to the last line included in the original image data D1, the control unit 174 controls the transfer of the null image data by outputting the null image data addition control signal S6 (ACT 106) and disables the light emission control by the print head enable signal ES (ACT107). In other words, the control unit 174 outputs the original image data D1 to the plurality of DRV circuits 140 to control the light emission of the plurality of light emitting elements 131, and then executes the turn-off control C2 for turning off the plurality of light emitting elements 131.

In the above description, the case where the image data transfer control unit 183 adds null image data based on the null image data addition control signal S6 has been described, but null image data may be added in the page memories 180-Y, 180-M, 180-C, and 180-K.

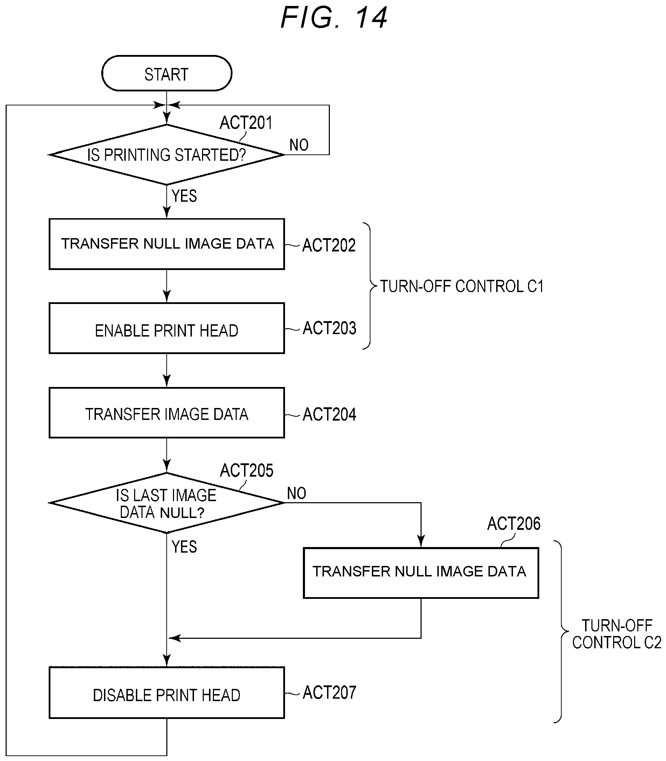

FIG. 14 is a flowchart illustrating a second example of turn-off control (non-emission control) by the image forming apparatus according to the first embodiment. For example, when the control panel 179 receives a print start instruction from the user, the control unit 174 detects this print start (ACT 201, YES) and executes the turn-off controls C1 (ACT 202, ACT 203) and C2 (ACT 206, ACT 207).

For example, the control unit 174 outputs the null image data addition control signal S6 to control the transfer of the null image data (ACT 202), enables the light emission control by the print head enable signal ES (ACT 203), and outputs an image data transfer control signal to control the transfer of the original image data D1 (ACT 204). That is, the control unit 174 executes the turn-off control C1 before outputting the original image data D1 to the plurality of DRV circuits 140 to control the light emission of the plurality of light emitting elements 131. Thereafter, the control unit 174 outputs the original image data D1 to the plurality of DRV circuits 140 and controls the light emission of the plurality of light emitting elements 131 according to the original image data D1.

After controlling the light emission of the plurality of light emitting elements 131 according to the last line included in the original image data D1, when the last line is other than null (ACT 205, NO), the control unit 174 outputs the null image data addition control signal S6 to control the transfer of the null image data (ACT 206) and disables the light emission control by the print head enable signal ES (ACT 207). When the last line is null (ACT 205, YES), the control unit 174 disables the light emission control by the print head enable signal ES (ACT 207). In other words, the control unit 174 outputs the original image data D1 to the plurality of DRV circuits 140 to control the light emission of the plurality of light emitting elements 131, and then executes the turn-off control C2 when the last line is other than null, and does not execute the turn-off control C2 when the last line is null.

In the above description, the case where the image data transfer control unit 183 adds null image data based on the null image data addition control signal S6 has been described, but null image data may be added in the page memories 180-Y, 180-M, 180-C, and 180-K.

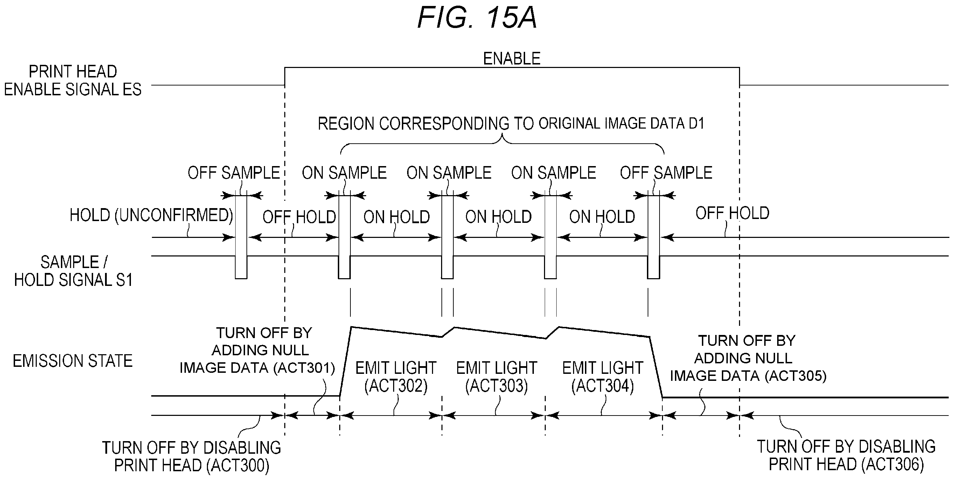

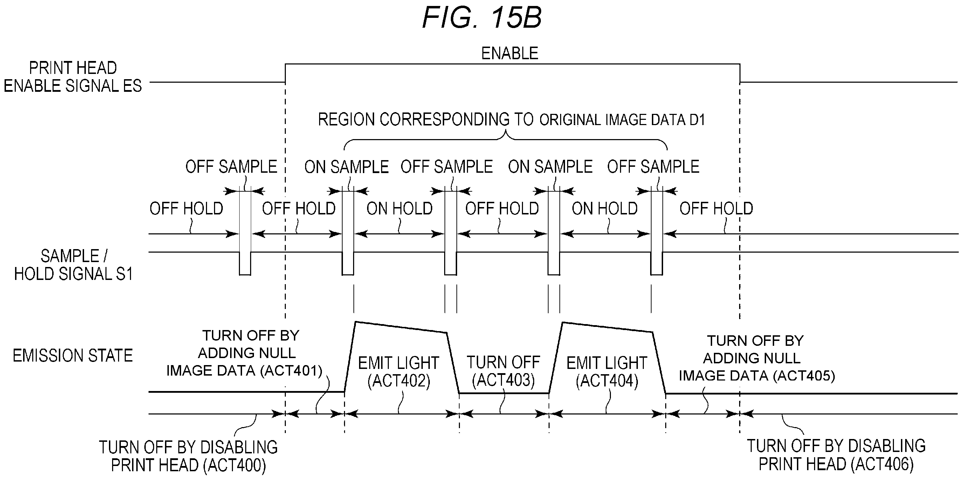

FIGS. 15A and 15B are diagrams illustrating an example of the relationship between the sample/hold signal and the light emitting state of the light emitting element when the turn-off control according to the first embodiment is performed. As illustrated in FIG. 15A, in response to the print head enable signal ES being disabled, the light emitting element 131 is turned off (ACT 300), and then the print head enable signal ES is enabled, but the light emitting element 131 continues to be turned off by adding the null image data before the region corresponding to the original image data D1 (by the turn-off control C1) (ACT 301). Subsequently, in the region corresponding to the original image data D1, the light emitting element 131 repeats light emission by the light emission control according to the original image data D1 (ACT 302) (ACT 303) (ACT 304). Subsequently, the light emitting element 131 is turned off by adding the null image data after the region corresponding to the original image data D1 (by the turn-off control C2) (ACT 305). Thereafter, the print head enable signal ES is disabled, and the light emitting element 131 continues to be turned off (ACT 306).

As illustrated in FIG. 15B, in response to the print head enable signal ES being disabled, the light emitting element 131 is turned off (ACT 400), and then the print head enable signal ES is enabled, but the light emitting element 131 continues to be turned off by adding the null image data before the region corresponding to the original image data D1 (by the turn-off control C1) (ACT 401). Subsequently, in the region corresponding to the original image data D1, the light emitting element 131 is turned on (ACT 402), turned off (ACT 403), and turned on (ACT 404) by the light emission control according to the original image data D1. Subsequently, the light emitting element 131 is turned off by adding the null image data after the region corresponding to the original image data D1 (by the turn-off control C2) (ACT 405). Thereafter, the print head enable signal ES is disabled, and the light emitting element 131 continues to be turned off (ACT 406).

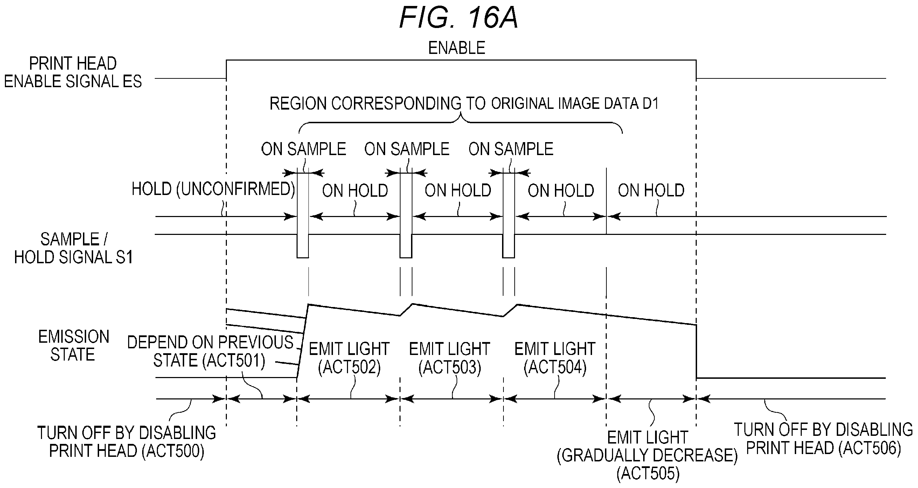

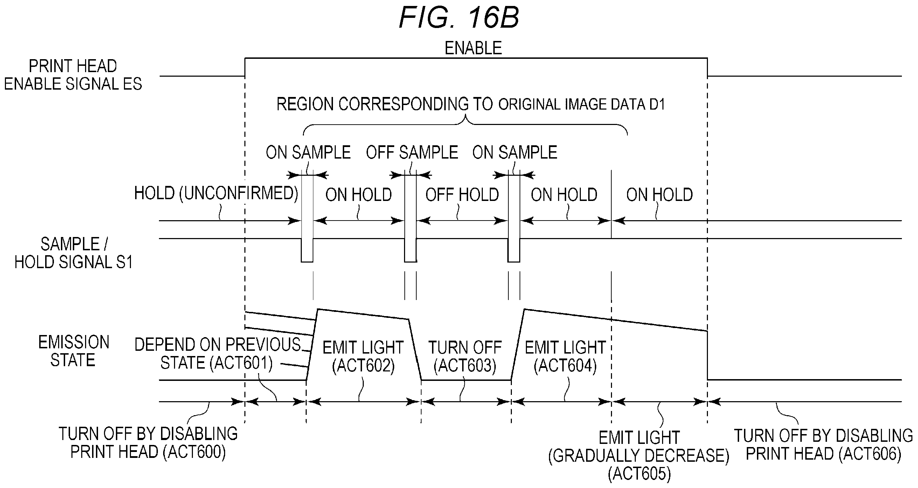

FIGS. 16A and 16B are diagrams illustrating an example of the relationship between the sample/hold signal and the light emitting state of the light emitting element when the turn-off control is not performed. As illustrated in FIG. 16A, since the light emitting element 131 is turned off in response to the print head enable signal ES being disabled (ACT 500), and then the print head enable signal ES is enabled, and the null image data is not added before the region corresponding to the original image data D1, the light emitting state of the light emitting element 131 is turned on or off depending on the previous light emitting state (ACT 501). In other words, the light emission of the light emitting element 131 is unconfirmed until the original image data D1 is input. Subsequently, in the region corresponding to the original image data D1, the light emitting element 131 repeats light emission by the light emission control according to the original image data D1 (ACT 502) (ACT 503) (ACT 504). Since null image data is not added after the region corresponding to the original image data D1, the electric charge held in the capacitor 142 gradually decreases, and the light amount of the light emitting element 131 correspondingly decreases (ACT 505). Thereafter, the print head enable signal ES is disabled, and the light emitting element 131 is turned off (ACT 506).

As illustrated in FIG. 16B, since the light emitting element 131 is turned off in response to the print head enable signal ES being disabled (ACT 600), and then the print head enable signal ES is enabled, and the null image data is not added before the region corresponding to the original image data D1, the light emitting state of the light emitting element 131 is turned on or off depending on the previous light emitting state (ACT 601). In other words, the light emission of the light emitting element 131 is unconfirmed until the original image data D1 is input. Subsequently, in the region corresponding to the original image data D1, the light emitting element 131 is turned on (ACT 602), turned off (ACT 603), and turned on (ACT 604) by the light emission control according to the original image data D1. Since null image data is not added after the region corresponding to the original image data D1, the electric charge held in the capacitor 142 gradually decreases, and the light amount of the light emitting element 131 correspondingly decreases (ACT 605). Thereafter, the print head enable signal ES is disabled, and the light emitting element 131 is turned off (ACT 606).

### [Second Embodiment: Configuration of Print Head]

In a second embodiment, description of parts common to the first embodiment will be omitted as appropriate, and description will be focused on parts different from the first embodiment. In the first embodiment, the case where null image data is added and the turn-off control is executed has been described, but in the second embodiment, the turn-off control is executed by turning off the current supply to the light emitting element 131 instead of adding the null image data. Further, in the second embodiment, also in the light emission control of the light emitting element 131 based on the original image data D1, the light emission control corresponding to the blank image included in the original image data D1 is turned off by turning off the current supply to the light emitting element 131.

FIG. 17 is a diagram illustrating an example of a circuit configuration including a DRV circuit for driving a light emitting element, a light emitting element that emits light according to the DRV circuit, and a switch that switches a current supply to the light emitting element according to a second embodiment. In the circuit illustrated in FIG. 17 and the circuit illustrated in FIG. 5, the same elements are denoted by the same reference numerals.

The circuit configuration illustrated in FIG. 17 includes a switch SW. The switch SW switches between supply and non-supply of current supply to the light emitting element 131 according to switching signals (ON/OFF signals). That is, the switch SW switches between whether or not to supply a current to the light emitting element 131 (current supply is turned on or off). When the switch SW is closed by a light emission ON signal S31, a current flows through the light emitting element 131 and the light emitting element 131 emits light. When the switch SW is opened by a light emission OFF signal S32, no current flows through the light emitting element 131 and the light emitting element 131 is turned off.

FIG. 18 is a diagram illustrating an example of a head circuit block of the print head according to the second embodiment. As illustrated in FIG. 18, the light emitting unit 10 includes a head circuit block including the IC 15, and the IC 15 includes a light emitting element address counter 151, a decoder 152, a D/A conversion circuit 153, a light amount correction memory 154, a light emission ON/OFF instruction circuit 155, and the like. The light emitting element address counter 151, the decoder 152, the D/A conversion circuit 153, the light amount correction memory 154, and the light emission ON/OFF instruction circuit 155 supply signals (sample/hold signal S1, emission level signal S2, light emission ON signal S31, and light emission OFF signal S32) for controlling the light emission intensity and ON and OFF for each light emitting element 131 to the DRV circuit 140 and the like.

As illustrated in FIG. 18, the light emitting element 131 is connected to each DRV circuit 140, and a switch SW is connected to each light emitting element 131. Each individual DRV circuit 140 supplies an individual current to each individual light emitting element 131 when the individual switch SW is closed, the individual DRV circuit 140 does not supply a current to its respective individual light emitting element 131 in a when the individual switch SW is opened.

The light emission ON/OFF instruction circuit 155 receives a horizontal synchronization signal S4, a light emitting element address signal S5, original image data D1, and additional null image data D2. The light emission ON/OFF instruction circuit 155 determines ON or OFF of each light emitting element 131 according to the input light emitting element address signal S5, original image data D1, and additional null image data D2. The light emission ON/OFF instruction circuit 155 determines the light emission (ON) of the light emitting element 131 based on image data (for example, black image data) other than the null image data included in the original image data D1. The light emission ON/OFF instruction circuit 155 determines whether to turn off (OFF) the light emitting element 131 based on the null image data included in the original image data D1 or the additional null image data D2.

The light emission ON/OFF instruction circuit 155 outputs the light emission ON signal S31 for closing the switch SW connected to the DRV circuit 140 to the switch SW by the determination of the light emission of each light emitting element 131. Accordingly, a current flows through the light emitting element 131, and the light emitting element 131 emits light. The light emission ON/OFF instruction circuit 155 outputs the light emission OFF signal S32 for opening the switch SW connected to the DRV circuit 140 to the switch SW by the determination of the turn-off of each light emitting element 131. Accordingly, regardless of the electric charge held in the capacitor 142, no current flows through the light emitting element 131, and the light emitting element 131 is turned off. When the light emitting element 131 is emitting light, the light emitting element 131 is immediately turned off when the switch SW is opened. In other words, the turn-off can be immediately determined regardless of the electric charge held in the capacitor 142. When each light emitting element 131 emits light, a current corresponding to the correction data D3 stored in the light amount correction memory 154 flows.

### [Second embodiment: Light Emission Control of Print Head]

FIG. 19 is a diagram illustrating an example of a relationship between a sample/hold signal, a capacitor potential, original image data D1 and additional null image data D2, a switch SW, and a light emitting state of the light emitting element when turn-off control according to the second embodiment is performed.

As illustrated in FIG. 19, in response to the print head enable signal ES being disabled, the light emitting element 131 is turned off (ACT 700), and then the print head enable signal ES is enabled, but by adding null image data before the region corresponding to the original image data D1 (by the turn-off control C1), the light emission ON/OFF instruction circuit 155 outputs the light emission OFF signal S32 according to the additional null image data D2 to the switch SW, the switch SW is opened by the light emission OFF signal S32, and the light emitting element 131 continues to be turned off (ACT 701).

Subsequently, in the region corresponding to the original image data D1, the light emitting element 131 is turned on, turned off, and turned on by light emission control according to the original image data D1 (ACT 702) (ACT 703) (ACT 704). In this case, the light emission ON/OFF instruction circuit 155 outputs the light emission ON signal S31 to the switch SW in accordance with image data (for example, black image data) other than the null image data included in the original image data D1, the switch SW is closed by the light emission ON signal S31, and the light emitting element 131 emits light according to the potential of the capacitor 142 (ACT 702) (ACT 704). The light emission ON/OFF instruction circuit 155 outputs the light emission OFF signal S32 to the switch SW according to the null image data included in the original image data D1, the switch SW is opened by the light emission OFF signal S32, and the light emitting element 131 is turned off (ACT 703).

By adding null image data after the region corresponding to the original image data D1 (by the turn-off control C2), the light emission ON/OFF instruction circuit 155 outputs the light emission OFF signal S32 to the switch SW according to the additional null image data D2, the switch SW is opened by the light emission OFF signal S32, and the light emitting element 131 is turned off (ACT 705). Thereafter, the print head enable signal ES is disabled, and the light emitting element 131 continues to be turned off (ACT 706).

FIG. 20 is an example of a relationship between the sample/hold signal, the capacitor potential, the original image data D1, the switch SW, and the light emitting state of the light emitting element when the turn-off control according to the second embodiment is not performed. As illustrated in FIG. 20, since the light emitting element 131 is turned off in response to the print head enable signal ES being disabled (ACT 800), and then the print head enable signal ES is enabled, and the null image data is not added before the region corresponding to the original image data D1, the potential level of the capacitor 142 and the modified state of the switch SW depend on the previous light emission state, and the light emission state of the light emitting element 131 is also turned on or off depending on the previous light emission state (ACT 801). In other words, the light emission of the light emitting element 131 is unconfirmed until the original image data D1 is input.

In the region corresponding to the original image data D1, the light emitting element 131 is turned on, turned off, turned on by light emission control according to the original image data D1 (ACT 802) (ACT 803) (ACT 804). In this case, the light emission ON/OFF instruction circuit 155 outputs the light emission ON signal S31 to the switch SW in accordance with image data (for example, black image data) other than the null image data included in the original image data D1, the switch SW is closed by the light emission ON signal S31, and the light emitting element 131 emits light according to the potential of the capacitor 142 (ACT 802) (ACT 804). The light emission ON/OFF instruction circuit 155 outputs the light emission OFF signal S32 to the switch SW according to the null image data included in the original image data D1, the switch SW is opened by the light emission OFF signal S32, and the light emitting element 131 is turned off (ACT 803).

Since null image data is not added after the region corresponding to the original image data D1, the switch SW remains closed by the original image data D1 immediately before, the electric charge held in the capacitor 142 gradually decreases, and the light amount of the light emitting element 131 correspondingly decreases (ACT 805). Thereafter, the print head enable signal ES is disabled, and the light emitting element 131 is turned off (ACT 806).

According to the first and second embodiments described above, it is possible to provide an image forming apparatus that prevents unintended light emission of a light emitting element and provides excellent reproduction of an original image. The control unit 174 controls light emission of a plurality of light emitting elements 131 according to at least the last line of the plurality of image lines included in the original image data D1, and then executes the turn-off control C2 on the plurality of light emitting elements 131. Thus, even in a case where unintended electric charges remain in the capacitor 142, the light emitting elements 131 can be turned off reliably and immediately after the image formation of the last line.

The control unit 174 can execute the turn-off control C2 by outputting a control signal for adding the additional null image data D2 after the last line. The light emitting element 131 is turned on according to image data other than null in the original image data D1, turned off according to null image data in the original image data D1, and further turned off according to additional null image data D2. Alternatively, as illustrated in FIG. 17, a switch SW may be provided in the circuit to execute the turn-off control C2. The current supply to the light emitting element 131 can be cut off by opening the switch SW by the light emission OFF signal corresponding to the null image data in the original image data D1 or the additional null image data D2. Further, the control unit 174 may execute the first turn-off control when the last line is other than null and may not execute the first turn-off control when the last line is null. Thereby, unnecessary operations can be reduced.

The control unit 174 of the image forming apparatus may execute the turn-off control C1 on the plurality of light emitting elements 131 before controlling the light emission of the plurality of light emitting elements 131 by outputting the image data to the plurality of DRV circuits 140. Thereby, even in the case where unnecessary electric charges remain in the capacitor 142 due to the previous image formation, the light emitting element 131 can be turned off reliably before the image of the line at the beginning is formed. The turn-off control C1 can be executed in the same manner as the turn-off control C2.

## Claims

1. An image forming apparatus (100), comprising:
a print head (1) including:
a light emitting unit (10) including a transparent substrate (11);
a rod lens array (12);
a plurality of light emitting element lines (13) formed on the transparent substrate (11), each including a plurality of light emitting elements (131) arranged in a main scanning direction;
a plurality of drive circuits (140) corresponding to the plurality of light emitting elements (131), respectively;
an integrated circuit (15) disposed at one end of the transparent substrate (11); and
a connector (16) electrically connected to the print head (1) and a control system of the image forming apparatus (100);
**characterized in that** the image forming apparatus (100) further comprises a control circuit (174) configured to:
add footer null image data after original image data corresponding to an image portion to be formed by one of the light emitting elements, and
supply the original image data followed by the footer null image data to the print head, and cause the one of the light emitting elements to emit light in accordance with the original image data and then to be turned off in accordance with the footer null image data.

2. The image forming apparatus according to claim 1, wherein the control circuit is further configured to:
determine whether a last line of the image portion is a blank image, and
when the last line of the image portion is a non-blank image, add the footer null image data after the original image data.

3. The image forming apparatus according to claim 2, wherein the control circuit is further configured to, when the last line of the image portion is a blank image, supply the original image data to the print head without adding the footer null image data.

4. The image forming apparatus according to any one of claims 1 to 3, wherein a length of the footer null image data is equal to a length of one line of the original image data.

5. The image forming apparatus according to any one of claims 1 to 4, wherein the control circuit is further configured to:
add header null image data before the original image data; and
sequentially supply the header null image data, the original image data, and the footer null image data, in this order, to the print head and cause the one of the light emitting elements to be turned off in accordance with the header null image data.

6. The image forming apparatus according to claim 5, wherein a length of the header null image data is equal to a length of one line of the original image data.

7. The image forming apparatus according to claim 5 or 6, wherein the control circuit is further configured to supply an enabling signal to the print head, such that the one of the drive circuits becomes enabled when the one of the light emitting elements is driven in accordance with the header null image data, and is not enabled when the one of the light emitting elements is driven in accordance with the footer null image data.

8. The image forming apparatus according to any one of claims 1 to 7, wherein the one of the drive circuits includes:
a transistor (143) connected in series with the one of the light emitting elements, and
a capacitor (142) connected between a channel electrode and a gate electrode.

9. The image forming apparatus according to claim 8, wherein the control circuit is further configured to cause a voltage corresponding to the footer null image data to be set in the capacitor during a sampling period for one line, and then the voltage to be maintained during a holding period for the one line, the voltage causing the one of the light emitting elements to be turned off.

10. The image forming apparatus according to any one of claims 1 to 9, wherein the print head further includes a switch connected in series with the one of the light emitting elements and is configured to turn off the switch in accordance with the footer null image data.

11. A method for controlling an image forming apparatus (100) comprising a print head (1) including:
a light emitting unit (10) including a transparent substrate (11);
a rod lens array (12);
a plurality of light emitting element lines (13) formed on the transparent substrate (11), each including a plurality of light emitting elements (131) along a main scanning direction;
a plurality of drive circuits (140) corresponding to the light emitting elements (131);
an integrated circuit (15) disposed at one end of the transparent substrate (11); and
a connector (16) electrically connected to the print head (1) and a control system of the image forming apparatus (100);
**characterized in that** the method comprising:
adding footer null image data after original image data corresponding to an image portion to be formed by one of the light emitting elements; and
supplying the original image data followed by the footer null image data to the print head, and causing the one of the light emitting elements to emit light in accordance with the original image data and then to be turned off in accordance with the footer null image data.

12. The method according to claim 11, further comprising:
determining whether a last line of the image portion is a blank image, wherein
when it is determined that the last line of the image portion is a non-blank image, the footer null image data is added after the original image data.

13. The method according to claim 12, wherein when it is determined that the last line of the image portion is a blank image, the original image data is supplied to the print head without the footer null image data being added.

14. The method according to any one of claims 11 to 13, wherein a length of the footer image null data is equal to a length of one line of the original image data.

15. The method according to any one of claims 11 to 14, further comprising:
adding header null image data before the original image data; and
sequentially supplying the header null image data, the original image data, and the footer null image data, in this order, to the print head and causing the one of the light emitting elements to be turned off in accordance with the header null image data.

## Patentansprüche

1. Bilderzeugende Vorrichtung (100), umfassend:
einen Druckkopf (1), der umfasst:
eine Licht emittierende Einheit (10), die ein transparentes Substrat (11) umfasst;
eine Stablinsenanordnung (12);
mehrere Zeilen mit Licht emittierenden Elementen (13), die auf dem transparenten Substrat (11) ausgebildet sind und die jeweils mehrere Licht emittierende Elemente (131) umfassen, die in einer Hauptabtastrichtung angeordnet sind;
mehrere Ansteuerschaltungen (140), die jeweils den mehreren Licht emittierenden Elementen (131) entsprechen;
eine integrierte Schaltung (15), die an einem Ende des transparenten Substrats (11) angeordnet ist; und
einen Steckverbinder (16), der mit dem Druckkopf (1) und einem Steuersystem der bilderzeugenden Vorrichtung (100) elektrisch verbunden ist;
**dadurch gekennzeichnet, dass** die bilderzeugende Vorrichtung (100) ferner eine Steuerschaltung (174) umfasst, die ausgelegt ist zum:
Hinzufügen von Fußzeilen-Nullbilddaten nach Originalbilddaten, die einem Bildabschnitt entsprechen, der von einem der Licht emittierenden Elemente erzeugt wird, und
Liefern der Originalbilddaten gefolgt von den Fußzeilen-Nullbilddaten an den Druckkopf und Bewirken, dass das eine der Licht emittierenden Elemente Licht gemäß den Originalbilddaten emittiert und anschließend gemäß den Fußzeilen-Nullbilddaten ausgeschaltet wird.

2. Bilderzeugende Vorrichtung nach Anspruch 1, wobei die Steuerschaltung ferner ausgelegt ist zum:
Bestimmen, ob eine letzte Zeile des Bildabschnitts ein leeres Bild ist, und
Hinzufügen, wenn die letzte Zeile des Bildabschnitts ein nicht leeres Bild ist, der Fußzeilen-Nullbilddaten nach den Originalbilddaten.

3. Bilderzeugende Vorrichtung nach Anspruch 2, wobei die Steuerschaltung ferner so ausgelegt ist, dass sie, wenn die letzte Zeile des Bildabschnitts ein leeres Bild ist, die Originalbilddaten ohne Hinzufügen der Fußzeilen-Nullbilddaten an den Druckkopf liefert.

4. Bilderzeugende Vorrichtung nach einem der Ansprüche 1 bis 3,
wobei eine Länge der Fußzeilen-Nullbilddaten gleich einer Länge einer Zeile der Originalbilddaten ist.

5. Bilderzeugende Vorrichtung nach einem der Ansprüche 1 bis 4, wobei die Steuerschaltung ferner ausgelegt ist zum:
Hinzufügen von Kopfzeilen-Nullbilddaten vor den Originalbilddaten; und
sequenzielles Liefern der Kopfzeilen-Nullbilddaten, der Originalbilddaten und der Fußzeilen-Nullbilddaten in dieser Reihenfolge an den Druckkopf und Bewirken, dass das eine der Licht emittierenden Elemente gemäß den Kopfzeilen-Nullbilddaten ausgeschaltet wird.

6. Bilderzeugende Vorrichtung nach Anspruch 5, wobei eine Länge der Kopfzeilen-Nullbilddaten gleich einer Länge einer Zeile der Originalbilddaten ist.

7. Bilderzeugende Vorrichtung nach Anspruch 5 oder 6, wobei die Steuerschaltung ferner zum Liefern eines Aktivierungssignals an den Druckkopf ausgelegt ist, derart dass die eine der Ansteuerschaltungen aktiviert wird, wenn das eine der Licht emittierenden Elemente gemäß den Kopfzeilen-Nullbilddaten angesteuert wird, und nicht aktiviert wird, wenn das eine der Licht emittierenden Elemente gemäß den Fußzeilen-Nullbilddaten angesteuert wird.

8. Bilderzeugende Vorrichtung nach einem der Ansprüche 1 bis 7, wobei die eine der Ansteuerschaltungen umfasst:
einen Transistor (143), der mit dem einen der Licht emittierenden Elemente in Reihe geschaltet ist, und
einen Kondensator (142), der zwischen eine Kanalelektrode und eine Gateelektrode geschaltet ist.

9. Bilderzeugende Vorrichtung nach Anspruch 8, wobei die Steuerschaltung ferner so ausgelegt ist, dass sie bewirkt, dass eine Spannung, die den Fußzeilen-Nullbilddaten entspricht, im Kondensator während einer Abtastperiode für eine Zeile eingestellt wird und die Spannung dann während einer Halteperiode für die erste Zeile aufrechterhalten wird, wobei die Spannung bewirkt, dass das eine der Licht emittierenden Elemente ausgeschaltet wird.

10. Bilderzeugende Vorrichtung nach einem der Ansprüche 1 bis 9, wobei der Druckkopf ferner einen Schalter umfasst, der mit dem einen der Licht emittierenden Elemente in Reihe geschaltet und zum Ausschalten des Schalters gemäß den Fußzeilen-Nullbilddaten ausgelegt ist.

11. Verfahren zur Steuerung einer bilderzeugenden Vorrichtung (100) mit einem Druckkopf (1), der umfasst:
eine Licht emittierende Einheit (10), die ein transparentes Substrat (11) umfasst;
eine Stablinsenanordnung (12);
mehrere Zeilen mit Licht emittierenden Elementen (13), die auf dem transparenten Substrat (11) ausgebildet sind und die jeweils mehrere Licht emittierende Elemente (131) entlang einer Hauptabtastrichtung umfassen;
mehrere Ansteuerschaltungen (140), die den mehreren Licht emittierenden Elementen (131) entsprechen;
eine integrierte Schaltung (15), die an einem Ende des transparenten Substrats (11) angeordnet ist; und
einen Steckverbinder (16), der mit dem Druckkopf (1) und einem Steuersystem der Bilderzeugungsvorrichtung (100) elektrisch verbunden ist;
**dadurch gekennzeichnet, dass** das Verfahren umfasst:
Hinzufügen von Fußzeilen-Nullbilddaten nach Originalbilddaten, die einem Bildabschnitt entsprechen, der von einem der Licht emittierenden Elemente erzeugt wird; und
Liefern der Originalbilddaten gefolgt von den Fußzeilen-Nullbilddaten an den Druckkopf und Bewirken, dass das eine der Licht emittierenden Elemente Licht gemäß den Originalbilddaten emittiert und anschließend gemäß den Fußzeilen-Nullbilddaten ausgeschaltet wird.

12. Verfahren nach Anspruch 11, ferner umfassend:
Bestimmen, ob eine letzte Zeile des Bildabschnitts ein leeres Bild ist, wobei,
wenn bestimmt wird, dass die letzte Zeile des Bildabschnitts ein nicht leeres Bild ist, die Fußzeilen-Nullbilddaten nach den Originalbilddaten hinzugefügt werden.

13. Verfahren nach Anspruch 12, wobei, wenn bestimmt wird, dass die letzte Zeile des Bildabschnitts ein leeres Bild ist, die Originalbilddaten ohne Hinzufügen der Fußzeilen-Nullbilddaten an den Druckkopf geliefert werden.

14. Verfahren nach einem der Ansprüche 11 bis 13, wobei eine Länge der Fußzeilen-Nullbilddaten gleich einer Länge einer Zeile der Originalbilddaten ist.

15. Verfahren nach einem der Ansprüche 11 bis 14, ferner umfassend:
Hinzufügen von Kopfzeilen-Nullbilddaten vor den Originalbilddaten; und
sequenzielles Liefern der Kopfzeilen-Nullbilddaten, der Originalbilddaten und der Fußzeilen-Nullbilddaten in dieser Reihenfolge an den Druckkopf und Bewirken, dass das eine der Licht emittierenden Elemente gemäß den Kopfzeilen-Nullbilddaten ausgeschaltet wird.

## Revendications

1. Appareil de formation d'images (100), comprenant :
une tête d'impression (1) incluant :
une unité électroluminescente (10) incluant un substrat transparent (11) ;
un réseau de lentilles barreaux (12) ;
une pluralité de lignes d'éléments électroluminescents (13) formées sur le substrat transparent (11), chaque ligne incluant une pluralité d'éléments électroluminescents (131) agencés dans une direction de balayage principale ;
une pluralité de circuits d'attaque (140) correspondant à la pluralité d'éléments électroluminescents (131), respectivement ;
un circuit intégré (15) disposé à une extrémité du substrat transparent (11) ; et
un connecteur (16) connecté électriquement à la tête d'impression (1) et à un système de commande de l'appareil de formation d'images (100) ;
**caractérisé en ce que** l'appareil de formation d'images (100) comprend en outre un circuit de commande (174) configuré de manière à :
ajouter des données d'images nulles de pied de page après des données d'image d'origine correspondant à une partie d'image devant être formée par l'un des éléments électroluminescents ; et
fournir les données d'image d'origine suivies des données d'images nulles de pied de page, à la tête d'impression, et amener ledit un des éléments électroluminescents à émettre de la lumière conformément aux données d'image d'origine, et à être ensuite mis hors tension conformément aux données d'images nulles de pied de page.

2. Appareil de formation d'images selon la revendication 1, dans lequel le circuit de commande est en outre configuré de manière à :
déterminer si une dernière ligne de la partie d'image est une image vierge ; et
lorsque la dernière ligne de la partie d'image est une image non vierge, ajouter les données d'images nulles de pied de page après les données d'image d'origine.

3. Appareil de formation d'images selon la revendication 2, dans lequel le circuit de commande est en outre configuré de manière à, lorsque la dernière ligne de la partie d'image est une image vierge, fournir les données d'image d'origine à la tête d'impression sans ajouter les données d'images nulles de pied de page.

4. Appareil de formation d'images selon l'une quelconque des revendications 1 à 3, dans lequel une longueur des données d'images nulles de pied de page est égale à une longueur d'une ligne des données d'image d'origine.

5. Appareil de formation d'images selon l'une quelconque des revendications 1 à 4, dans lequel le circuit de commande est en outre configuré de manière à :
ajouter des données d'images nulles d'en-tête avant les données d'image d'origine ; et
fournir séquentiellement les données d'images nulles d'en-tête, les données d'image d'origine, et les données d'images nulles de pied de page, dans cet ordre, à la tête d'impression, et amener ledit un des éléments électroluminescents à être mis hors tension conformément aux données d'images nulles d'en-tête.

6. Appareil de formation d'images selon la revendication 5, dans lequel une longueur des données d'images nulles d'en-tête est égale à une longueur d'une ligne des données d'image d'origine.

7. Appareil de formation d'images selon la revendication 5 ou 6, dans lequel le circuit de commande est en outre configuré de manière à fournir un signal d'activation à la tête d'impression, de sorte que ledit un des circuits d'attaque devient activé lorsque ledit un des éléments électroluminescents est attaqué conformément aux données d'images nulles d'en-tête, et qu'il n'est pas activé lorsque ledit un des éléments électroluminescents est attaqué conformément aux données d'images nulles de pied de page.

8. Appareil de formation d'images selon l'une quelconque des revendications 1 à 7, dans lequel ledit un des circuits d'attaque inclut :
un transistor (143) connecté en série avec ledit un des éléments électroluminescents ; et
un condensateur (142) connecté entre une électrode de canal et une électrode grille.

9. Appareil de formation d'images selon la revendication 8, dans lequel le circuit de commande est en outre configuré de manière à amener une tension correspondant aux données d'images nulles de pied de page à être réglée dans le condensateur pendant une période d'échantillonnage pour une ligne, et à amener ensuite la tension à être maintenue pendant une période de maintien pour la ligne, la tension occasionnant la mise hors tension dudit un des éléments électroluminescents.

10. Appareil de formation d'images selon l'une quelconque des revendications 1 à 9, dans lequel la tête d'impression inclut en outre un commutateur connecté en série audit un des éléments électroluminescents, et est configurée de manière à mettre le commutateur hors tension conformément aux données d'images nulles de pied de page.

11. Procédé de commande d'un appareil de formation d'images (100) comprenant une tête d'impression (1) incluant :
une unité électroluminescente (10) incluant un substrat transparent (11) ;
un réseau de lentilles barreaux (12) ;
une pluralité de lignes d'éléments électroluminescents (13) formées sur le substrat transparent (11), chaque ligne incluant une pluralité d'éléments électroluminescents (131) le long d'une direction de balayage principale ;
une pluralité de circuits d'attaque (140) correspondant aux éléments électroluminescents (131) ;
un circuit intégré (15) disposé à une extrémité du substrat transparent (11) ; et
un connecteur (16) connecté électriquement à la tête d'impression (1) et à un système de commande de l'appareil de formation d'images (100) ;
**caractérisé en ce que** le procédé comprend les étapes ci-dessous consistant à :
ajouter des données d'images nulles de pied de page après des données d'image d'origine correspondant à une partie d'image devant être formée par l'un des éléments électroluminescents ; et
fournir les données d'image d'origine suivies des données d'images nulles de pied de page, à la tête d'impression, et amener ledit un des éléments électroluminescents à émettre de la lumière conformément aux données d'image d'origine, et à être ensuite mis hors tension conformément aux données d'images nulles de pied de page.

12. Procédé selon la revendication 11, comprenant en outre l'étape ci-dessous consistant à :
déterminer si une dernière ligne de la partie d'image est une image vierge, dans lequel
lorsqu'il est déterminé que la dernière ligne de la partie d'image est une image non vierge, les données d'images nulles de pied de page sont ajoutées après les données d'image d'origine.

13. Procédé selon la revendication 12, dans lequel, lorsqu'il est déterminé que la dernière ligne de la partie d'image est une image vierge, les données d'image d'origine sont fournies à la tête d'impression sans que les données d'images nulles de pied de page ne soient ajoutées.

14. Procédé selon l'une quelconque des revendications 11 à 13, dans lequel une longueur des données d'images nulles de pied de page est égale à une longueur d'une ligne des données d'image d'origine.

15. Procédé selon l'une quelconque des revendications 11 à 14, comprenant en outre les étapes ci-dessous consistant à :
ajouter des données d'images nulles d'en-tête avant les données d'image d'origine ; et
fournir séquentiellement les données d'images nulles d'en-tête, les données d'image d'origine et les données d'images nulles de pied de page, dans cet ordre, à la tête d'impression, et occasionner la mise hors tension dudit un des éléments électroluminescents conformément aux données d'images nulles d'en-tête.
